# EUROPEAN PATENT APPLICATION

(11) **EP 1 568 834 A1**
(43) Date of publication of application: **31.08.2005**
(21) Application number: 03812373.3
(22) Date of filing: 02.12.2003
(51) Int. Cl.: E05B 49/00, B60R 25/00, B60R 25/04

(54) **KEYLESS ENTRY SYSTEM AND KEYLESS ENTRY METHOD**

(30) Priority: 04.12.2002 JP 2002325805
(71) Applicant: KABUSHIKI KAISHA TOSHIBA, Tokyo 105-8001 (JP)
(72) Inventor: IKEDA, Yoko, Toshiba Corporation, Minato-ku, Tokyo 105-8001 (JP); IMAI, Yasuyuki, Toshiba Corporation, Minato-ku, tokyo 105-8001 (JP)
(74) Representative: Kramer - Barske - Schmidtchen
(86) International application number: PCT/JP2003/015444
(87) International publication number: WO 2004/051034

(57) **Abstract**

A keyless entry system include a key device 13 for carrying out locking and unlocking operations, a mobile terminal 14 including a mobile terminal transmitting/receiving unit 18 for transmitting user-ID number data a1 used for identifying a user of the key device 13, and a key security system 15 including a key device transmitting/receiving unit 20 for receiving the user-ID number data a1 from the mobile terminal 14. The key security system 15 includes an ID-number data comparison unit 23 for recognizing a fact that key-device ID number data a2 pre-stored in the key device 13 is identical to the user-ID number data a1 transmitted from the mobile terminal 14 and a key-device ECU 16 for receiving an unlock enable signal b and outputting a lock control signal f to the key device 13. According to the above-described configuration, when operating and activating the key device, such as a door lock device of a vehicle and a house, using a mobile terminal, such as a cell phone, which many people usually carry around with them, a keyless entry system and a keyless entry method that are reliable and convenient for users can be provided.

## Description

### Technical Field

The present invention relates to a key technology to prevent personal properties or articles in cars and houses from being stolen and, in particular, to a keyless entry system and a keyless entry method for allowing an operator to operate a key device after identifying the operator who operates the key device.

### Background Art

Recently, various antitheft methods have been proposed as occurrence of thefts of vehicles themselves or thefts of articles in vehicles increases.

As one of the antitheft methods, a keyless entry system (antitheft system) is known in which a mobile equipment or portable device which is usually carried around by a user of a mobile device such as cell phone has a function for transmitting identification information so as to be used as a key.

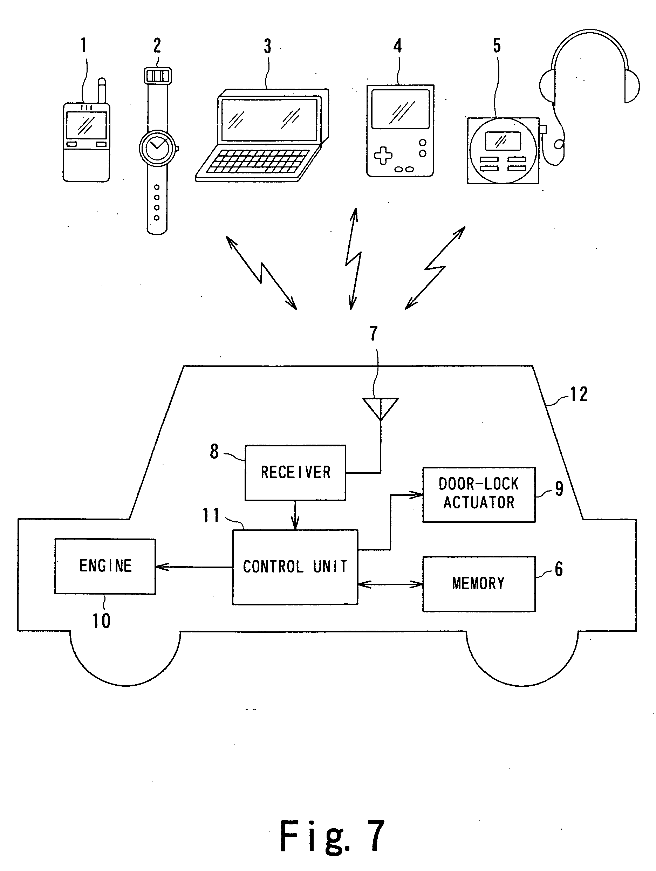

For example, Japanese Patent Laid-open (KOKAI) Publication No. 2002-115438 discloses a system which includes, as shown in Fig. 7, a plurality of mobile devices 1 to 5 (a cell phone 1, a wrist watch 2, a handheld computer 3, a portable game console 4, and a portable music player 5) capable of transmitting their unique identification information using Bluetooth (Trade Mark of Bluetooth SIG. Inc. in the USA), and an automobile (vehicle) 12 equipped with a memory 6 preliminarily storing (registering) the identification information of the mobile devices 1 to 5, a receiver 8 including an antenna 7 for receiving the identification information transmitted from the mobile devices 1 to 5, and a control unit 11 for determining whether the received identification information accords with the information stored in the memory 6 and allowing a driver to drive the vehicle 12 by causing a door lock actuator 9 to release a door lock and causing an engine 10 to start based on the determination result.

Thus, by operating one of the plurality of mobile devices 1 to 5, the driver can conveniently operate a door lock device of the vehicle using these mobile devices 1 to 5 in addition to a key dedicated to the vehicle or an auto key.

Each of the mobile devices 1 to 5 includes a combination of the model information and unique identification information thereof, and therefore, even if the mobile devices 1 to 5 have the same model information, each of the mobile devices 1 to 5 can be identified as a unique one.

However, since the driver carries around such a mobile device, the mobile device tends to be subject to loss and theft. In some cases, theft from the vehicle and theft of the vehicle itself occur, which provides a significant inconvenience.

### Disclosure of The Invention

Therefore, it is an object of the present invention to provide a keyless entry system provided with a key device, such as a door lock device, for allowing, for example, a user of a vehicle to use a mobile device, such as a cell phone, to lock and unlock the key device and allowing the user to make an urgent operation when the user loses the mobile device or has the mobile device stolen, and also relates to a keyless entry method utilizing such keyless entry system.

To achieve the above-described objects, the present invention provides a keyless entry system which includes a key device for carrying out locking and unlocking operations, a mobile terminal provided with a mobile terminal transmitting/receiving unit for transmitting user-ID number data used for identifying a user of the key device, and a key security system provided with a key device transmitting/receiving unit for receiving the user-ID number data from the mobile terminal. The key security system includes an ID-number data comparison unit for recognizing a fact that key-device ID number data pre-stored in the key device is identical to the user-ID number data transmitted from the mobile terminal and a key-device ECU for receiving an unlock enable signal and outputting a lock control signal to the key device so as to unlock the key device by the control signal.

In the keyless entry system according to the present invention, the key device may be an engine start device for starting and stopping a vehicle engine in accordance with either one of an operation of the mobile terminal and automatic recognition between transmitting/receiving units provided in the key device and the mobile terminal.

In addition, the key device may be a door lock device for locking and unlocking a door in accordance with either one of an operation of the mobile terminal and automatic recognition between transmitting/receiving units provided in the key device and the mobile terminal. Furthermore, the door lock device may be a vehicle door lock device or a house door lock device for locking and unlocking a door in accordance with either one of an operation of the mobile terminal and automatic recognition between transmitting/receiving units provided in the door lock device and the mobile terminal.

The user-ID number data can be erased or modified in accordance with a communication from a key-device security service site to the mobile terminal. The user-ID number data can be erased or modified in accordance with a communication from a key-device security service site to an in-car communication device.

The mobile terminal transmitting/receiving unit and the key device transmitting and receiving unit are Bluetooth transmitting/receiving units.

The user-ID number data for identifying a user of the key device is at least one of number data of terminal serial number data transmitted from a Bluetooth transmitting unit of the mobile terminal and Bluetooth module number data specific to the Bluetooth transmitting unit.

Moreover, the key device transmitting/receiving unit may include a key-device Bluetooth transmitting/receiving module for receiving user-ID number data transmitted from the mobile terminal, a key-device ID number data memory for storing key-device ID number data, an ID-number data comparison unit for comparing the user-ID number data with the key-device ID number data and outputting an unlock enable signal when the user-ID number data accords with the key-device ID number data, and a key-device ECU for receiving the unlock enable signal and transmitting a lock control signal to the key device.

Software required for the comparison between the ID-number data may be stored in one of the key-device transmitting/receiving unit and the mobile terminal in advance, or may be downloaded from a key-device security service site when required.

Furthermore, to achieve the above-described objects of the present invention, there is provided a keyless entry method utilizing the keyless entry system, which includes a key device for carrying out locking and unlocking operations, a mobile terminal including a mobile-terminal transmitting/receiving unit for transmitting user-ID number data for identifying a user of the key device, and a key security system including a key-device transmitting/receiving unit for receiving the user-ID number data transmitted from the mobile terminal, the keyless entry method including the steps of: storing key-device ID number data in a Bluetooth transmitting/receiving unit of the key device in advance; storing the user-ID number data in the mobile terminal operated by the user of the key device in advance; transmitting the user-ID number data from the mobile terminal to the Bluetooth transmitting/receiving unit; comparing the user-ID number data received by the Bluetooth transmitting/receiving unit with the key-device ID number data stored in the Bluetooth transmitting/receiving unit in advance by using an ID-number data comparison unit; transmitting an unlock enable signal to a key-device ECU when the ID number data accords with each other; and unlocking the key device by transmitting a lock control signal from the key-device ECU to the key device in response to reception of the unlock enable signal.

According to another aspect of the present invention, there is provided a mounted side unit in a keyless entry system which includes a key device for carrying out locking and unlocking operations and a key security system including a key device transmitting/receiving unit for receiving user-ID number data used for identifying a user of the key device from a terminal. The key security system includes an ID-number data comparison unit for recognizing a fact that key-device ID number data pre-stored in the key device is identical to the received user-ID number data and a key-device ECU for receiving an unlock enable signal and outputting a lock control signal to the key device so as to unlock the key device by the unlock signal.

As described above, according to the present invention, when mobile terminals, such as cell phones, which many people usually carry around, are used to operate and activate a key device, such as a door lock device of a vehicle and a house, a user of the mobile terminal is authenticated, and therefore, theft protection for the vehicle and the house can be provided while maintaining convenience for the user.

### Brief Description of The Drawings

Fig. 1 is a block diagram of a keyless entry system according to a first embodiment of the present invention.
Fig. 2 is a flow chart of a keyless entry process according to the first embodiment of the present invention.
Fig. 3 is a block diagram of a keyless entry system according to a second embodiment of the present invention.
Fig. 4 is a flow chart of a keyless entry process according to the second embodiment of the present invention.
Fig. 5 is a block diagram of a keyless entry system according to a third embodiment of the present invention.
Fig. 6 is a flow chart of a keyless entry process according to the third embodiment of the present invention.
Fig. 7 is a block diagram of a known keyless entry system.

### Best Mode for Carrying Out The Invention

Embodiments of a keyless entry system and a keyless entry method according to the present invention will be described hereunder with reference to the accompanying drawings.

### (First Embodiment)

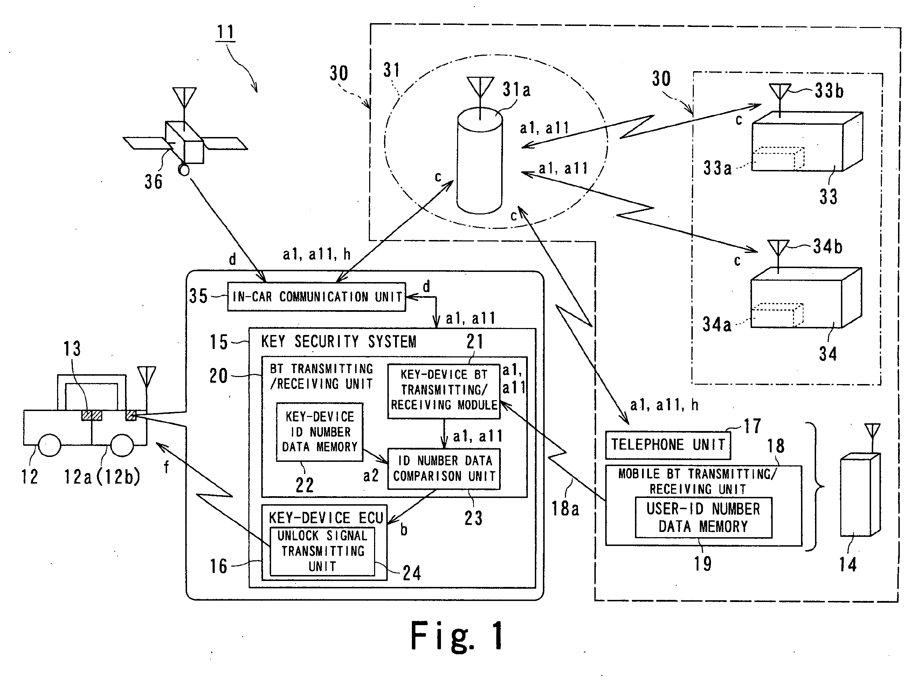

Fig. 1 is a schematic diagram of a keyless entry system according to the first embodiment of the present invention.

A keyless entry system 11 includes a key device 13 mounted on a vehicle 12 for locking and unlocking a door and a key security system 15 mounted on the vehicle 12 and having a function capable of communicating with a mobile terminal 14.

The key device 13 is used for a driver or a passenger of the vehicle 12 (hereinafter referred to as a "user") to lock and unlock doors 12a and 12b (only one side is shown) either remotely using the mobile terminal 14 or automatically.

The key device 13 can be operated by an owner of the vehicle 12 and a person who received the permission to drive the vehicle 12 from the owner (hereinafter referred to as a "user") either remotely using the mobile terminal 14 with respect to the vehicle 12 or automatic recognition at a time of getting on and off the vehicle 12.

The key device 13 receives user-ID number data a1 from the mobile terminal 14 of the user to unlock the door and authenticates the user-ID number data a1 to thereby lock and unlock the doors.

The user-ID number data a1 is determined in advance to identify a user and is stored in the mobile terminal 14 in advance.

A terminal serial number or a Bluetooth module number can be used as the user-ID number data a1. Since this number has, for example, multiple digits, the number can provide an identification function.

In the vehicle 12, in order to identify a user operating the key device 13, the key device 13 includes an ID-number data comparison unit 23, which compares key device ID number data a2, which is key device ID number data pre-stored in the key device 13 of the vehicle, with the user-ID number data a1 to check whether the two data are identical.

If two ID numbers in the two ID number data are identical, the ID-number data comparison unit 23 outputs an unlock enable signal b.

A user of the vehicle 12 carries around the mobile terminal 14 serving as an operation key for the key device 13 at a time when the user uses or intends to use the vehicle 12. The mobile terminal 14 can be used as a cell phone and can also be used to lock and unlock the door of the vehicle 12 through remote control or by automatic recognition.

That is, the mobile terminal 14 includes a telephone unit 17 for providing a normal conversation function and a mobile Bluetooth transmitting/receiving unit 18 (hereinafter referred to as a "mobile BT transmitting/receiving unit"), which instructs the key device 13 of the vehicle 12 to lock and unlock by remote control or by the automatic recognition.

The mobile BT transmitting/receiving unit 18 may have a structure that enables it to be removably inserted into the mobile terminal 14, such as a dongle or a card (not shown).

The key security system 15 includes a key-device Bluetooth transmitting and receiving unit 20 (hereinafter referred to as a "key-device BT transmitting/receiving unit") and a key electronic control unit (key-device ECU) 16.

The key-device BT transmitting/receiving unit 20 includes a key-device BT transmitting/receiving module 21 (hereinafter referred to as a "key-device BT transmitting/receiving module"), a key-device ID number data memory 22 for storing the key-device ID number data a2, and the ID-number data comparison unit 23.

The key-device BT transmitting/receiving unit 20 can receive Bluetooth communication radio waves 18a (hereinafter referred to as "BT communication radio waves") transmitted from the mobile BT transmitting/receiving unit 18 within, for example, a 10-m radius from the mobile terminal 14.

The BT communication radio waves 18a include ID number data a for identifying a user of the vehicle 12.

The mobile BT transmitting/receiving unit 18 uses the BT communication radio waves 18a to communicate with the vehicle 12 based on a communication technology used for a short-range wireless communication within about a 10-m radius.

The key-device ID number data memory 22 in the vehicle 12 stores the key-device ID number data a2 identical to the user-ID number data a1 for identifying a user of the vehicle 12 in advance.

The ID-number data comparison unit 23 compares the user-ID number data a1 included in the BT communication radio waves 18a transmitted from the mobile BT transmitting/receiving unit 18 with the key-device ID number data a2 pre-stored in the key-device ID number data memory 22 in the vehicle. If these numbers are identical, the ID-number data comparison unit 23 transmits the unlock enable signal b to the key-device ECU 16.

The unlock enable signal b is transmitted to the key-device ECU 16 provided for the key security system 15.

The key-device ECU 16 is incorporated in the key security system 15 and can be operated through the remote control using the mobile terminal 14 to instruct the key device 13 so as to lock and unlock the door.

The key-device ECU 16 includes an unlock signal transmitting unit 24. Upon receiving the unlock enable signal b from the ID-number data comparison unit 23, the unlock signal transmitting unit 24 transmits a lock control signal f to the key device 13.

Upon receiving the lock control signal f, the key device 13 activates a lock mechanism (not shown) to lock or unlock the door.

In a key operation of the key device 13, the ID number data for identifying a user of the vehicle 12 is first used as the user-ID number data a1 for authenticating a user.

For example, a terminal serial number of the mobile terminal 14 or a Bluetooth module number of the mobile BT transmitting/receiving unit 18 can be used as the ID number in the user-ID number data a1.

The ID number in the user-ID number data a1 is assigned to a specific user in a key-device security service site 32.

Additionally, the ID number assigned to the specific user is stored in a user-ID number data memory 19 of the mobile terminal 14 in advance.

Furthermore, when a user loses the mobile terminal 14 storing the user-ID number data a1, the user can instruct the mobile terminal 14 to disable the user-ID number data a1 so as to disable the mobile terminal 14.

This disabling operation is carried out by transmitting a disable signal (not shown) which erases or modifies the user-ID number data a1 from the key-device security service site 32 to the mobile terminal 14.

Alternatively, for example, the disabling operation is carried out by the key-device security service site 32 transmitting a disable signal (not shown) which erases or modifies the key-device ID number data a2 stored in the key-device ID number data memory 22 of the vehicle 12.

In addition, in the event of an emergency, an alternative mobile terminal 14 can be conveniently used by allowing the alternative mobile terminal 14 to cooperate with the key-device security service site 32 via a wireless security network 30.

For example, in the event of an emergency, by downloading updated user-ID number data a11 from the key-device security service site 32, the updated user-ID number data a11 can be installed in an alternative mobile terminal 14.

Before installing the updated user-ID number data a11, for example, a user identification number that the user registers to the key-device security service site 32 in advance is used for the key-device security service site 32 to authenticate the user.

The user transmits the user identification number from the alternative mobile terminal 14 to the key-device security service site 32. If the user identification number is authenticated by the key-device security service site 32, the updated user-ID number data a11 is transmitted to the mobile terminal 14.

The user having the mobile terminal 14 can only check that, for example, the mobile terminal 14 receives the updated user-ID number data a11.

Additionally, through such checking operation, the user can know that the updated user-ID number data a11 is automatically stored in the user-ID number data memory 19 of the mobile terminal and the mobile terminal 14 can be used as a key.

If, in the event of an emergency, the user cannot acquire an alternative mobile terminal 14, the key-device security service site 32 gives, to the user, a mobile terminal 14 having the updated user-ID number data a11.

On the other hand, the wireless security network 30 is composed of a regular wireless network 31 which establishes communication between the mobile terminal 14 and the vehicle 12 and the key-device security service site 32 connected to the regular wireless network 31.

The regular wireless network 31 includes a wireless base station 31a, which is provided to be capable of communicating with an in-car communication unit 35 in the vehicle 12, the mobile terminal 14, and the key-device security service site 32.

The key-device security service site 32 is a keyless entry service center 33 for offering a service to provide the updated user-ID number data a11 and information about the closest key-device security service site from the current location or a dealer 34 supporting keyless entry.

An owner of the vehicle 12 makes an agreement with the keyless entry service center 33 or the dealer 34 supporting keyless entry in terms of a security service to receive the setup user ID number that identifies the owner of the vehicle 12.

Additionally, the keyless entry service center 33 or the keyless entry dealer 34 installs (inputs) the user-ID number data a1 including the setup user ID number in the mobile terminal 14 of the user.

Furthermore, in an occasion that the user loses the mobile terminal 14, the user can receive a specific updated ID number corresponding to a master key in a newly purchased mobile terminal 14 as occasion demands.

The updated ID number corresponding to a master key is stored in the key-device ID number data memory 22 of the key security system 15 in the vehicle 12 in advance as a backup key so that the updated ID number serves as the master key.

In order to input the key-device ID number data a2 to the vehicle 12, the key-device security service site 32 inputs (stores) a key device ID number to the key-device ID number data memory 22 of the key security system 15 in the vehicle 12 in advance before the use of the vehicle 12.

In the key-device security service site 32 which provides the vehicle 12 with the vehicle security service site information, the keyless entry service center 33 and the dealer 34 supporting keyless entry respectively have information databases 33a and 34a to share a plurality of user ID number data items a1 to an assigned to a plurality of users who make an agreement with the keyless entry service center 33 and the keyless entry dealer 34 in terms of the above described security service.

Each of the user ID number data items a1 to an shared with the keyless entry service center 33 and the keyless entry dealer 34 is included in an inquiry signal c and is transmitted from the mobile terminal 14 of the user of the vehicle 12 to one of the key-device security service sites 32 so as to receive service information data h indicating the location of the key-device security service site 32 from the key-device security service site 32.

Accordingly, the user goes to the closest key-device security service site 32 based on the service information data h received by the mobile terminal 14 and can borrow a mobile terminal 14 that the key-device security service site 32 offers.

Reference numeral 35 designates an in-car communication device in the vehicle 12. The in-car communication device 35 transmits and receives a regular information communication signal d via the regular wireless network 31 to carry out any regular information communication. Furthermore, the in-car communication device 35 can communicate with the mobile terminal 14 and, for example, can transmit and receive data to and from an artificial satellite 36, such as a broadcasting satellite and a communication satellite.

Furthermore, the in-car communication device 35 can transmit and receive data to and from the key security system 15.

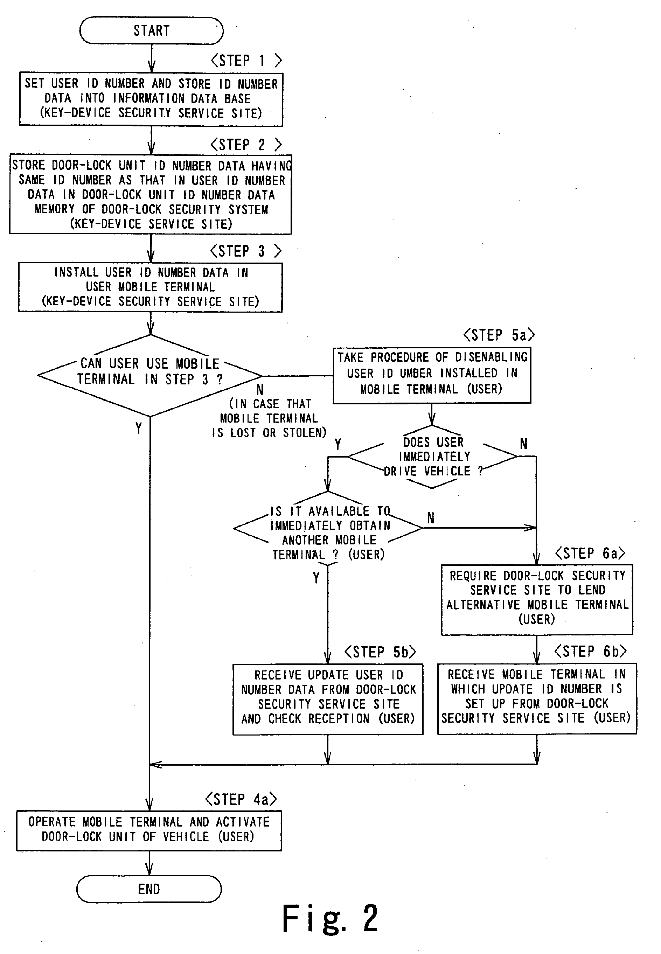

The operation of the keyless entry system 11 will be then described hereunder with reference to a flow chart in Fig. 2.

When the user of the vehicle 12 makes an agreement with the key-device security service site 32 in terms of a key device security service, the following steps are carried out.

At least one of the terminal serial number data of the mobile terminal 14 of the user of the vehicle 12 and the Bluetooth module number data specific to the mobile BT transmitting/receiving unit 18 is stored in the information databases 33a and 34a of the keyless entry service center 33 and the dealer 34 supporting keyless entry as the user-ID number data a1 for identifying a user of the vehicle 12 (Step 1).

The key-device ID number data a2 having the same ID number as that in the user-ID number data a1 stored in the information database 33a or 34a is stored in the key-device ID number data memory 22 (Step 2).

At the key-device security service site 32, the user-ID number data a1 is installed in (input to) the mobile terminal 14 of the user.

After this stage, the mobile terminal 14 of the user can be used as an operation key for the vehicle 12 (Step 3).

The user of the vehicle 12 operates the mobile terminal 14 to activate the key device 13 of the vehicle 12 (Step 4a).

After unlocking the door, when starting a driving engine of the vehicle 12, the user can operate a separately provided engine key (not shown) to start the driving engine.

The above-described Steps 1 to 4 are steps required for the user of the vehicle 12 to receive a theft protection service from the key-device security service site 32 before driving the vehicle 12 according to an agreement between the user of the vehicle 12 and the key-device security service site 32.

The case where the user of the vehicle 12 loses the mobile terminal 14 or has the mobile terminal 14 stolen will be described next.

First, the user disables the user ID number installed in the lost or stolen mobile terminal 14 (Step 5a).

In this case, if it is desired for the user to immediately drive the vehicle 12 and if the user can immediately receive another mobile terminal 14, for example, if a passenger of the vehicle 12 has another mobile terminal 14, the user operates the mobile terminal 14 to transmit the inquiry signal c to the key-device security service site 32.

Thereafter, the user receives the updated user-ID number data a11 from the key-device security service site 32 in response to the inquiry signal c and checks the reception (Step 5b).

The user of the vehicle 12 operates the mobile terminal 14 to activate the key device 13 of the vehicle 12 (return to Step 4a).

In a case where the user desires to immediately drive the vehicle 12, but the user cannot immediately receive another mobile terminal 14, the user requests the key-device security service site 32 to lend an alternative mobile terminal 14 (Step 6a).

The user receives a mobile terminal in which an updated ID number is set up, that is, the updated ID number is installed in the user-ID number data memory 19 from the key-device security service site 32 (Step 6b).

The user of the vehicle 12 operates the mobile terminal 14 to unlock the door of the vehicle 12 (return to Step 4a).

As described in the foregoing steps, when the user of the vehicle 12 loses the mobile terminal 14 or has the mobile terminal 14 stolen, the user of the vehicle 12 can receive an updated ID number from the key-device security service site 32 or the user of the vehicle 12 can receive a mobile terminal having the updated ID number from the key-device security service site 32 so as to remotely operate the vehicle 12.

Accordingly, even when the user loses the mobile terminal 14 used as a vehicle key, it becomes possible to prevent the vehicle from being stolen. In addition, the user can get something left in the compartment of the vehicle 12 without problems, thus providing convenience to the user.

### (Second Embodiment)

The second embodiment of the present invention will be described next.

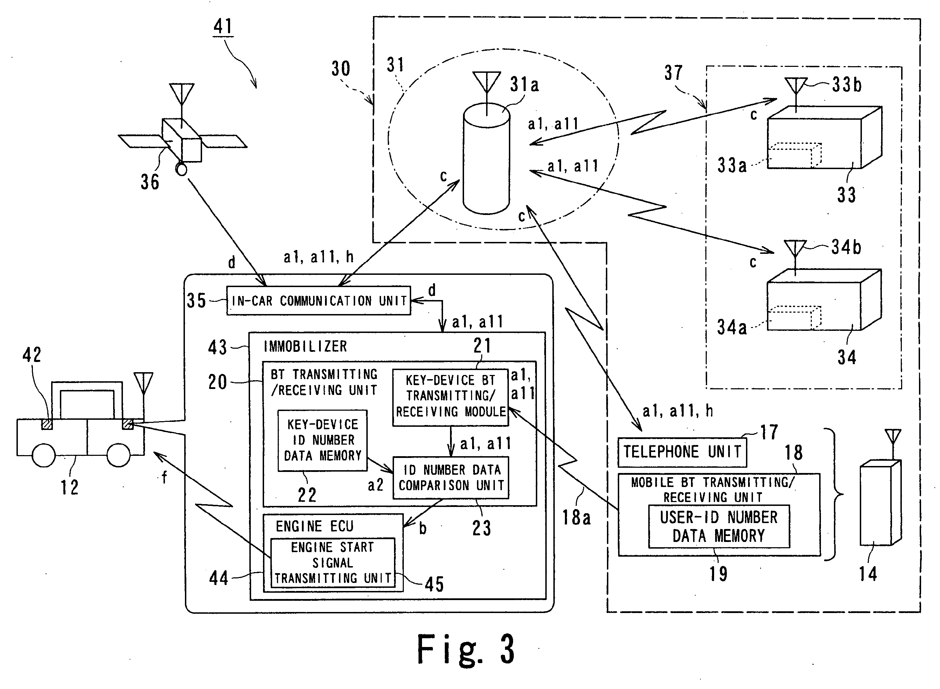

A keyless entry system according to the second embodiment is described with reference to Fig. 3, in which the same reference numerals are used to designate the same components or parts in Fig. 1.

According to this embodiment, a keyless entry system 41 is applied to the vehicle 12 mounting an immobilizer (anti-car theft system) 43, which controls starting an engine start device 42. The engine start device 42 is a key device which starts a (driving) engine (not shown) using a key.

The immobilizer 43 is a system that prevents the engine start device 42 of the driving engine from starting and stopping if a user of the vehicle 12 cannot be authenticated.

The immobilizer 43 includes a key-device Bluetooth transmitting/receiving unit 20 (hereinafter referred to as a "key-device BT transmitting/receiving unit") and an engine ECU 44 which is a key-device ECU for transmitting an engine start signal g to the engine start device 42.

The engine ECU 44 includes an engine start signal transmitting unit 45 for transmitting the engine start signal g to the engine start device 42 when the ID-number data comparison unit 23 authenticates the user.

More specifically, the engine start signal transmitting unit 45 operates at a time when the engine start signal transmitting unit 45 receives an engine start enable signal e transmitted from the ID-number data comparison unit 23.

The engine start enable signal e is transmitted from the ID-number data comparison unit 23 to the engine ECU 44 when the ID-number data comparison unit 23 compares the user-ID number data a1 contained in the BT communication radio waves 18a transmitted from the mobile BT transmitting/receiving unit 18 with engine-start-device ID number data a2, which is key-device ID number data stored in a engine-start-device ID number data memory 25 and when these data are identical. When the engine ECU 44 receives the engine start enable signal e, the engine ECU 44 transmits the engine start signal g to the engine start device 42 so as to start the driving engine.

On the other hand, for the mobile terminal 14 of the user, the key-device security service site 32, which is connected using another mobile terminal 14 via the wireless security network 30, is provided. The key-device security service site 32 is used when the mobile terminal 14 breaks down during use, the user loses the mobile terminal 14, or the user has the mobile terminal 14 stolen.

In addition, to prevent the theft of the vehicle 12 itself, an engine security service site 37 is provided. The engine security service site 37 transmits a signal to the vehicle 12 in order to inhibit staring the engine of the vehicle 12.

For example, when the mobile terminal 14 transmits an ID number disable requesting signal j1 for disabling an ID number to the engine security service site 37, the engine security service site 37 transmits an ID number disable signal j2 to the key security system 15 of the vehicle 12 to erase or modify ID number data stored in the key-device ID number data memory 22 of the key security system 15.

The other configurations are the same as those in the first embodiment mentioned before, and therefore, repeated descriptions are omitted herein.

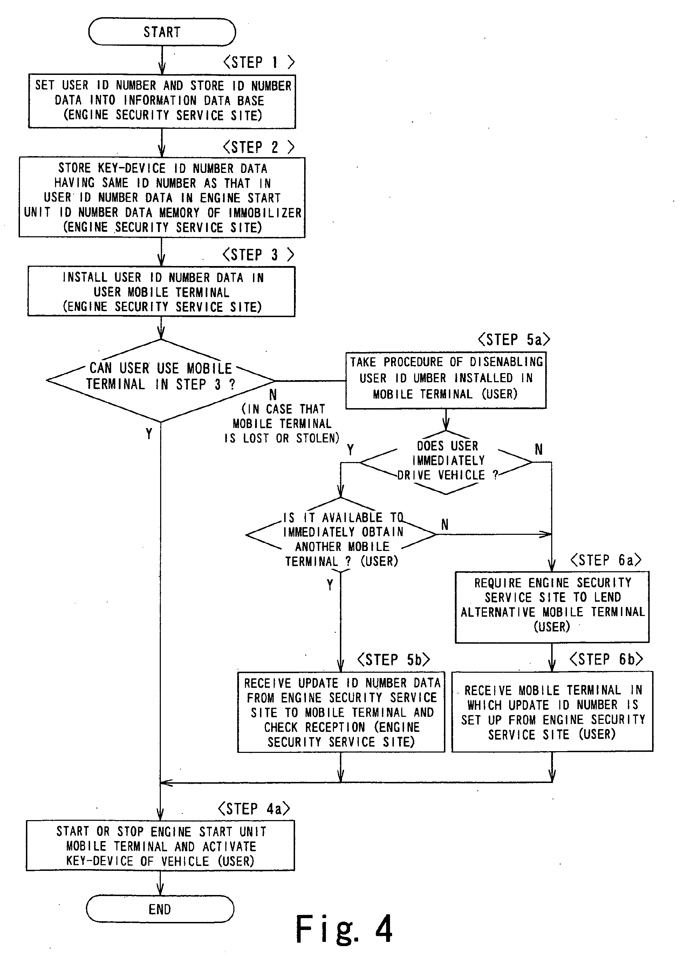

The operation of the above-described keyless entry system 41 is described next with reference to a flow chart in Fig. 4.

When the user of the vehicle 12 makes an agreement with the engine security service site 37 in terms of a key device security service, the following steps will be carried out.

At least one of the terminal serial number data of the mobile terminal 14 of the user of the vehicle 12 and the Bluetooth module number data specific to the mobile BT transmitting/receiving unit 18 is stored in the information databases 33a and 34a of the keyless entry service center 33 and the dealer 34 supporting keyless entry as the user-ID number data a1 for identifying the user of the vehicle 12 (Step 1).

The key-device ID number data a2 having the same ID number as that in the user-ID number data a1 stored in the information database 33a or 34a is stored in the engine-start-device ID number data memory 25 (Step 2).

At the engine security service site 37, the user-ID number data a1 is installed in (input to) the mobile terminal 14 of the user.

After this stage, the mobile terminal 14 of the user can be used as an operation key for the vehicle 12 (Step 3).

The user of the vehicle 12 operates the mobile terminal 14 to start or stop the engine start device 42 of the vehicle 12 (Step 4a).

After operating the mobile terminal 14 to start the engine start device 42, the user can operate a separately provided door lock key (not shown) to unlock the key device 13 of the vehicle 12.

The above-described (Step 1) to (Step 4a) are steps required for the user of the vehicle 12 to receive a theft protection service from the engine security service site 37 before using the vehicle 12 according to an agreement between the user of the vehicle 12 and the engine security service site 37.

In the case where the user of the vehicle 12 loses the mobile terminal 14 or has the mobile terminal 14 stolen, the engine security service site 37 erases or modifies the ID number data stored in the key security system 15 of the vehicle 12 so as to disable the ID number data.

The other operations are the same steps as those described in the first embodiment mentioned before, and therefore, repeated descriptions are omitted herein.

Accordingly, even when the user loses the mobile terminal 14 used as a vehicle key, the vehicle can be prevented from being stolen, and moreover, the theft of the vehicle itself can be prevented.

### (Third Embodiment)

A third embodiment of the present invention will be described next.

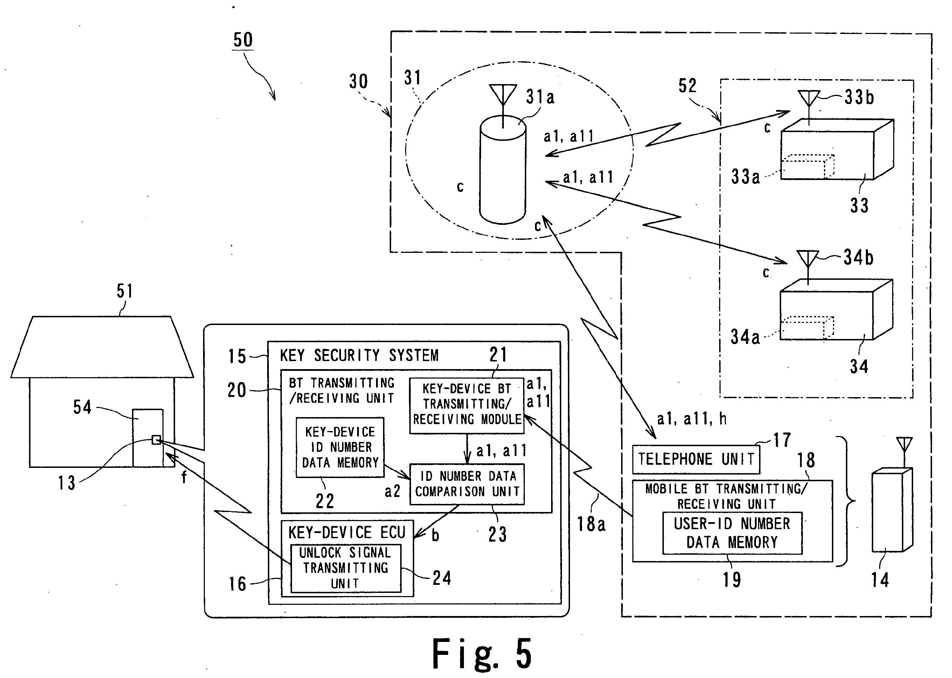

A keyless entry system according to the third embodiment is described with reference to Fig. 5, in which the same reference numerals are used to designate the same components or parts in Fig. 1.

According to the present invention, a keyless entry system 50 includes a key device 13 installed in, for example, a house 51, a mobile terminal 14, and a wireless security network 53 capable of connecting the mobile terminal 14 to a house security service site 52 via a regular wireless network 31.

In this third embodiment, basically, the house 51 may be considered as the vehicle 12 in the first embodiment shown in Fig. 1, and the in-car communication device 35 in the first embodiment shown in Fig. 1 may be considered to be eliminated from the wireless network.

That is, the house security service site 52 can communicate with the mobile terminal 14 via a communication antenna 52a and the house 51 can transmit ID number data for identifying the house 51 or an occupant of the house 51.

The other configurations are the same as those in the first embodiment mentioned before, and therefore, repeated descriptions are omitted herein.

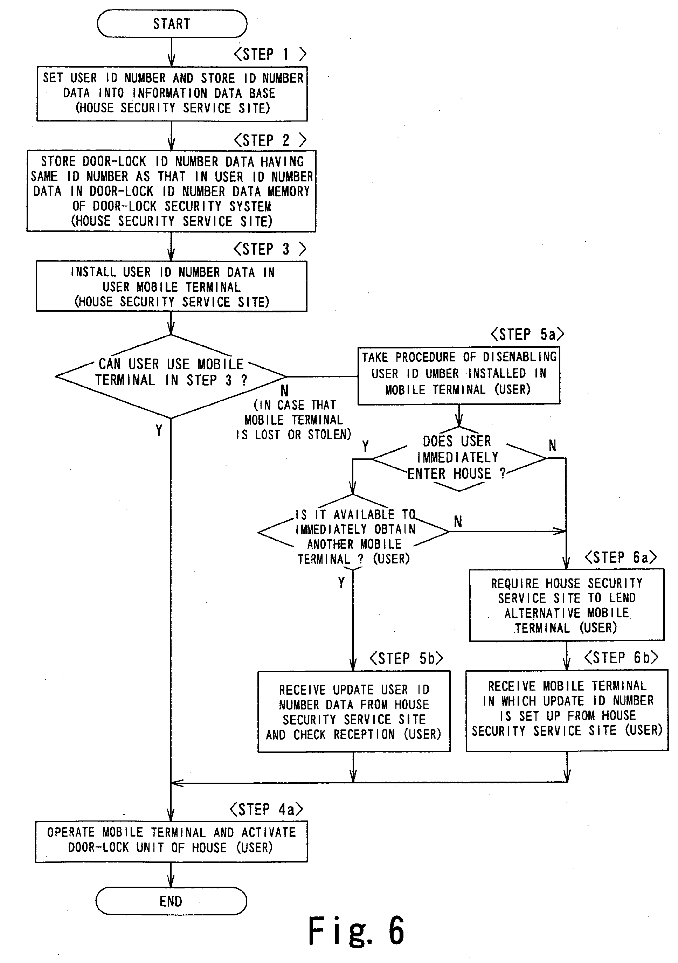

The operation of the keyless entry system 50 according to this embodiment is described next with reference to a flow chart in Fig. 6.

When an occupant of the house 51 makes an agreement with the house security service site 52 in terms of a key device security service, at least one of terminal serial number data of the mobile terminal 14 of the occupant of the house 51 and Bluetooth module number data specific to a mobile BT transmitting/receiving unit 18 is stored in the information database 33a or 34a of the keyless entry service center 33 and the dealer 34 supporting keyless entry as the user-ID number data a1 for identifying the occupant of the house 51 (Step 1).

The key-device ID number data a2 having the same ID number as that in the user-ID number data a1 stored in the information database 33a or 34a is stored in the key-device ID number data memory 22 (Step 2).

At the house security service site 52, the user-ID number data a1 is installed in (input to) the mobile terminal 14 of the occupant.

After this stage, the mobile terminal 14 of the occupant can be used as an operation key for the house 51 (Step 3).

The occupant of the house 51 operates the mobile terminal 14 to activate the key device 13 of the house 51 (Step 4a).

The above-described (Step 1) to (Step 4a) are steps required for the occupant of the house 51 to receive a theft protection service from the house security service site 52 before using (entering and exiting) the house 51 according to an agreement between the occupant of the house 51 and the house security service site 52.

In the case where the occupant of the house 51 loses the mobile terminal 14 or has the mobile terminal 14 stolen, steps are the same as those described in the above-described first embodiment, and therefore, the repeated descriptions are omitted herein.

Accordingly, the occupant of the house 51 can operate the mobile terminal 14 which the occupant carries around to unlock the key device 13 of the house 51 so that the occupant goes in and out the house 51. In addition, when the occupant of the house 51 loses the mobile terminal 14 or has the mobile terminal 14 stolen, the occupant can temporarily use another mobile terminal 14 (of another person). Furthermore, since the occupant can receive another mobile terminal 14 from the house security service site 52, the occupant can conveniently unlock the key device 13 of the house 51 even when the occupant loses the mobile terminal 14.

Furthermore, in the first to third embodiments of the present invention, a transmitting/receiving technology used in the key-device BT transmitting and receiving unit 20 of the key device 13 and the mobile BT transmitting/receiving unit 18 of the embodiment terminal 14 can be replaced with a wireless communication technology suitable for a short-range wireless communication, such as a dedicated short range communication (DSRC).

In addition, according to the above-described embodiments of the present invention, a key security system includes a key device for locking and unlocking and a key device transmitting and receiving unit for receiving user-ID number data from a terminal to identify a user of the key device. The key security system may provide a mounting unit which includes an ID-number data comparison unit for recognizing that key-device ID number data stored in the key device in advance is identical to the received user-ID number data and a key-device ECU for receiving a unlock enable signal and outputting a lock control signal to the key device so as to unlock the key device by the unlock signal. According to this embodiment, the present invention can be applied to terminals of various forms.

In the above-described embodiments, although the vehicle and the house are mentioned as objects to which the key device is provided, the present invention is not limited thereto. The present invention can be applied to similar objects that can hold the key device.

### Industrial Applicability

When mobile terminals, such as cell phones, which many people usually carry around, are used to operate and activate a key device, such as a door lock device of a vehicle and a house, a user of the mobile terminal is authenticated. Accordingly, the theft protection to the vehicle and the house can be provided while maintaining convenience for the user. Consequently, a keyless entry system and a keyless entry method which are safe and convenient for users are provided by the present invention, thus providing wide industrial applicability.

## Claims

1. A keyless entry system comprising:
a key device for carrying out locking and unlocking operations;
a mobile terminal provided with a mobile terminal transmitting/receiving unit for transmitting user-ID number data used for identifying a user of the key device; and
a key security system provided with a key device transmitting/receiving unit for receiving the user-ID number data from the mobile terminal,
said key security system comprising: an ID-number data comparison unit for recognizing a fact that key-device ID number data pre-stored in the key device is identical to the user-ID number data transmitted from the mobile terminal; and a key-device ECU for receiving an unlock enable signal and outputting a lock control signal to the key device so as to unlock the key device by the lock control signal.

2. The keyless entry system according to claim 1, wherein the key device is an engine start device for starting and stopping a vehicle engine in accordance with either one of an operation of the mobile terminal and automatic recognition between transmitting/receiving units provided in the key device and the mobile terminal.

3. The keyless entry system according to claim 1, wherein the key device is a door lock device for locking and unlocking a door in accordance with either one of an operation of the mobile terminal and automatic recognition between transmitting/receiving units provided in the key device and the mobile terminal.

4. The keyless entry system according to claim 3, wherein the door lock device is a vehicle door lock device for locking and unlocking a door in accordance with either one of an operation of the mobile terminal and automatic recognition between transmitting/receiving units provided in the door lock device and the mobile terminal.

5. The keyless entry system according to claim 3, wherein the door lock device is a house door lock device for locking and unlocking a door in accordance with either one of an operation of the mobile terminal and automatic recognition between transmitting/receiving units provided in the door lock device and the mobile terminal.

6. The keyless entry system according to any one of claims 1 to 5, wherein the user-ID number data is erasable or modified in accordance with a communication from a key-device security service site to the mobile terminal.

7. The keyless entry system according to any one of claims 1 to 5, wherein the key-device ID number data is erasable or modified in accordance with a communication from a key-device security service site to an in-car communication device.

8. The keyless entry system according to any one of claims 1 to 7, wherein the mobile terminal transmitting/receiving unit and the key device transmitting/receiving unit are Bluetooth transmitting/receiving units.

9. The keyless entry system according to claim 8, wherein the user-ID number data for identifying a user of the key device is at least one of number data of terminal serial number data transmitted from a Bluetooth transmitting unit of the mobile terminal and Bluetooth module number data specific to the Bluetooth transmitting unit.

10. The keyless entry system according to claim 8, wherein the key device transmitting/receiving unit comprises: a key-device Bluetooth transmitting/receiving module for receiving user-ID number data transmitted from the mobile terminal; a key-device ID number data memory for storing key-device ID number data; an ID-number data comparison unit for comparing the user-ID number data with the key-device ID number data and outputting an unlock enable signal when the user-ID number data matches the key-device ID number data; and a key-device ECU for receiving the unlock enable signal and transmitting a lock control signal to the key device.

11. A keyless entry method utilizing a keyless entry system, which comprises a key device for carrying out locking and unlocking operations, a mobile terminal including a mobile-terminal transmitting/receiving unit for transmitting user-ID number data for identifying a user of the key device, and a key security system including a key-device transmitting/receiving unit for receiving the user-ID number data transmitted from the mobile terminal, said keyless entry method comprising the steps of:
storing key-device ID number data in a Bluetooth transmitting/receiving unit of the key device in advance;
storing the user-ID number data in the mobile terminal operated by the user of the key device in advance;
transmitting the user-ID number data from the mobile terminal to the Bluetooth transmitting/receiving unit of the key device;
comparing the user-ID number data received by the Bluetooth transmitting/receiving unit of the key device with the key-device ID number data stored in the Bluetooth transmitting/receiving unit of the key device in advance by using an ID-number data comparison unit;
transmitting an unlock enable signal to a key-device ECU when the two number data match; and
unlocking the key device by transmitting a lock control signal from the key-device ECU to the key device in response to reception of the unlock enable signal.

12. The keyless entry method according to claim 11, wherein the unlocking step is a step of starting an engine start device of a vehicle.

13. The keyless entry method according to claim 11, wherein the unlocking step is a step of unlocking a door lock device of a vehicle.

14. The keyless entry method according to claim 11, wherein the unlocking step is a step of unlocking a door lock device of a house.

15. The keyless entry method according to claim 11, wherein software required for the comparing step of the two ID-number data is stored in one of the key-device transmitting/receiving unit and the mobile terminal in advance, or is downloaded from a key-device security service site when required.

16. A mounted side unit in a keyless entry system, comprising: a key device for carrying out locking and unlocking operations; and a key security system comprising a key device transmitting and receiving unit for receiving user-ID number data used for identifying a user of the key device from a terminal,
said key security system comprising: an ID-number data comparison unit for recognizing a fact that key-device ID number data pre-stored in the key device is identical to the received user-ID number data; and a key-device ECU for receiving an unlock enable signal and outputting a lock control signal to the key device so as to unlock the key device by the unlock signal.

17. The mounted side unit in a keyless entry system according to claim 16, wherein the key device is an engine start device for starting and stopping an engine of a vehicle.

18. The mounted side unit in a keyless entry system according to claim 16, wherein the key device is a vehicle door lock device for locking and unlocking a door of a vehicle.

19. The mounted side unit in a keyless entry system according to claim 16, wherein the key device is a house door lock device for locking and unlocking a door of a house.
